# EUROPEAN PATENT SPECIFICATION

(11) **EP 3 173 439 B1**
(45) Date of publication and mention of the grant of the patent: **25.12.2019**
(21) Application number: 16200159.8
(22) Date of filing: 23.11.2016
(51) Int. Cl.: B29B 7/00, B29B 7/88, B29B 9/12, B29C 45/00, B29K 77/00, B29L 15/00, C08J 5/00, C08K 5/098, C08K 5/10, C08K 5/29, C08K 7/02, C08K 7/14, C08G 69/26, C08G 69/48

(54) **RESIN PELLET, RESIN PELLET MANUFACTURING METHOD, AND MOLDED ARTICLE MANUFACTURING METHOD**
HARZPELLET, DESSEN HERSTELLUNGSVERFAHREN UND HERSTELLUNGSVERFAHREN EINES FORMARTIKELS
PASTILLE DE RÉSINE, PROCÉDÉ DE FABRICATION DE PASTILLES DE RÉSINE ET PROCÉDÉ DE FABRICATION D'ARTICLE MOULÉ

(30) Priority: 25.11.2015 JP 2015229676; 07.04.2016 JP 2016077494; 26.09.2016 JP 2016187529
(43) Date of publication of application: 31.05.2017
(73) Proprietor: JTEKT Corporation, Chuo-ku, Osaka-shi Osaka 542-8502 (JP)
(72) Inventor: KUNISHIMA, Takeshi, Osaka-shi,, Osaka 542-8502 (JP); NISHIDA, Tomoya, Osaka-shi,, Osaka 542-8502 (JP)
(74) Representative: Winter, Brandl, Fürniss, Hübner, Röss, Kaiser, Polte - Partnerschaft mbB

(56) References cited:
- EP-A1- 2 562 219
- WO-A1-2007/061965
- WO-A2-2008/030600
- DATABASE CA [Online] CHEMICAL ABSTRACTS SERVICE, COLUMBUS, OHIO, US; 1 August 2002 (2002-08-01), KOBAYASHI, SHOJI ET AL: "Thermoplastic polyamide elastomer resin compositions with good crystallization speed and moldability and their manufacture", XP002768403, retrieved from STN Database accession no. 2002:570361 -& JP 2002 212418 A (FUJI KASUI KOGYO KK) 31 July 2002 (2002-07-31)

## Description

### BACKGROUND OF THE INVENTION

### 1. Field of the Invention

The invention relates to resin pellets, resin pellet manufacturing methods, and methods for manufacturing molded articles using the resin pellets.

### 2. Description of the Related Art

Polyamide 66 (which is also referred to as "nylon 66" or "PA 66") is light in weight and has high self-lubricity, for example. Thus, polyamide 66 is used in a wide range of applications. Examples of the applications include sliding members, such as gears of speed reducers for electric power steering systems and resin bearing cages. In response to recent demands for smaller size and higher power automobile parts, resin members used for such parts are required to have high mechanical strength and high stiffness. To meet such requirements, carbodiimide is added to polyamide so as to increase resin stiffness and toughness.

Japanese Patent Application Publication No. 2014-209032 (JP 2014-209032 A), for example, discloses a resin pellet provided by a process involving melting and blending polyamide 66, a copper heat stabilizer, polycarbodiimide, and an impact modifier (e.g., EPDM rubber onto which maleic anhydride is grafted) in a two-shaft kneader, extruding the resulting blend, and solidifying the extruded blend.

Unfortunately, simply melting and blending polyamide and polycarbodiimide so as to manufacture resin pellets may substantially complete an increase in molecular weight of polyamide induced by the action of polycarbodiimide in the course of manufacture of the resin pellets. In this case, molding heat generated during manufacture of molded articles using the resin pellets tends to promote resin decomposition (or thermal decomposition), leading to large variations in molecular weights and properties of the resulting molded articles.
Polyamide compositions comprising polycarbodiimide are disclosed in JP 2002 - 212 418 A, WO 2008/030 600 A2, WO 2007/061 965 A1 and EP 2 562 219 A1.

An excessive increase in molecular weight of resin pellets yet to be molded forces a manufacturer to mold high melt viscosity resins. This disadvantageously makes it difficult to mold the resins with stability.

### SUMMARY OF THE INVENTION

An object of the invention is to provide a resin pellet, a resin pellet manufacturing method, and a method for manufacturing a molded article using the resin pellet that enable stable mass-production of molded articles having high molecular weights and reduction of property variations among the molded articles.

A resin pellet according to an aspect of the invention includes a polyamide resin and unreacted carbodiimide groups. The percentage of the unreacted carbodiimide groups in the resin pellet is 0.03% to 0.33% by mass, wherein determining the mass percentage of the carbodiimide groups involves cutting a thin piece from the pellet, measuring the intensity of the carbodiimide groups (-N=C=N-) by passing infrared rays through the thin piece, and quantifying the concentration of the carbodiimide groups in the thin piece by Lambert-Beer's law. The resin pellet according to the present invention is provided by a resin pellet manufacturing method including adding a carbodiimide bond-containing compound to a molten polyamide resin so as to cause an unreacted carbodiimide group to remain.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1A is a diagram illustrating a method for quantifying residual carbodiimide;
FIG. 1B is a diagram illustrating the method for quantifying residual carbodiimide;
FIG. 1C is a diagram illustrating the method for quantifying residual carbodiimide;
FIG. ID is a diagram illustrating the method for quantifying residual carbodiimide;
FIG. IE is a graph illustrating the method for quantifying residual carbodiimide;
FIG. IF is a diagram illustrating the method for quantifying residual carbodiimide;
FIG. 2 is a diagram illustrating a procedure for manufacturing resin pellets;
FIG. 3 is a diagram illustrating a reaction mechanism under the action of carbodiimide;
FIG. 4 is a diagram schematically illustrating a gear according to an embodiment of the invention;
FIG. 5 is a diagram illustrating a procedure for manufacturing resin pellets;
FIG. 6 is a graph illustrating number average molecular weights Mn of Examples 4 to 7, Reference Example 1, and Commercial Products 1 to 3;
FIG. 7 is a graph illustrating time-varying changes in the number average molecular weight Mn of a resin (or molded article) when aliphatic carbodiimide is used, and time-varying changes in the number average molecular weight Mn of a resin (or molded article) when aromatic carbodiimide is used;
FIG. 8 is a graph illustrating results of a test of tensile elongation at break conducted on the molded article provided using aliphatic carbodiimide and the molded article provided using aromatic carbodiimide;
FIG. 9 is a graph illustrating the relationship between the amount of carbodiimide added and the resulting tensile elongation at break;
FIG. 10 is a graph illustrating the relationship between the amount of residual carbodiimide (calculated in terms of compound) and the resulting tensile elongation at break;
FIG. 11 is a graph illustrating the relationship between the amount of residual carbodiimide (functional group) and the resulting tensile elongation at break;
FIG. 12 is a graph illustrating the relationship between the amount of carbodiimide added and the resulting tensile strength;
FIG. 13 is a graph illustrating the relationship between the frequency of occurrence of black spots in each lubricant-containing resin and the resulting tensile elongation at break;
FIG. 14 is a graph illustrating the relationship between the melting point of a lubricant contained in each resin and the resulting tensile elongation at break; and
FIG. 15 is a graph illustrating results of measurement of wear resistance and number average molecular weight of each resin molded article containing aramid fiber.

### DETAILED DESCRIPTION OF EMBODIMENTS

Embodiments of the invention will be described below in detail. A resin pellet according to an embodiment of the invention contains a polyamide resin and a carbodiimide group. Examples of the polyamide resin include aliphatic polyamides (such as PA 6, PA 66, PA 46, PA 12, PA 612, PA 610, PA 11, and PA 410), and aromatic polyamides (such as PA 6T, PA 9T, PA 10T, and PA MXD6). The polyamide resin is preferably aliphatic polyamide and more preferably polyamide 66 (PA 66). Any one of these polyamides may be used alone, or a combination of any two or more of these polyamides may be used. The polyamide resin has a number average molecular weight Mn of 15,000 to 25,000, for example. A base resin in the resin pellet may contain, in addition to the polyamide resin, a thermoplastic elastomer (such as an acid-denatured ethylene elastomer, EGMA, EPDM, or a polyamide elastomer), for example. Mixing a thermoplastic elastomer increases shock resistance of the resulting resin pellet.

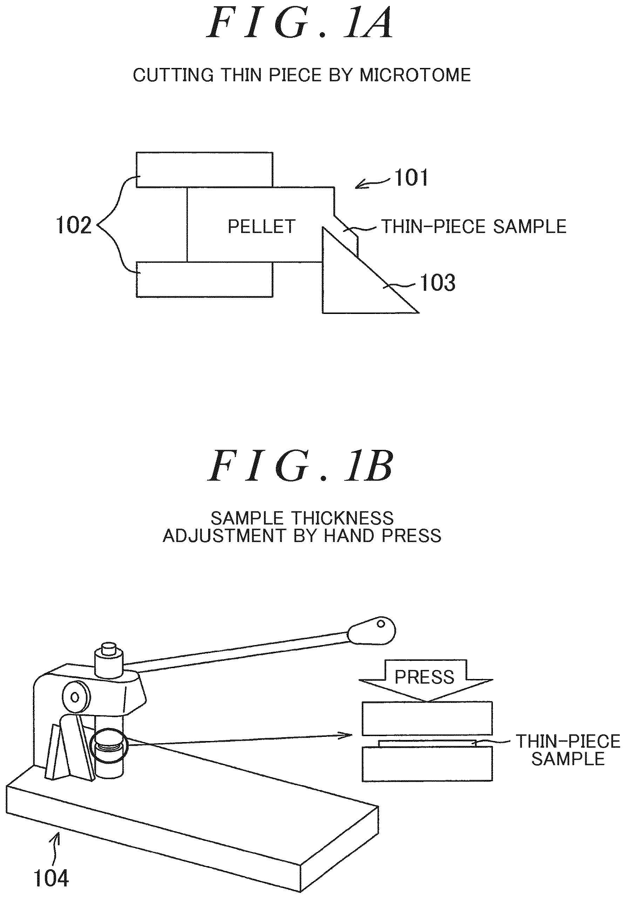

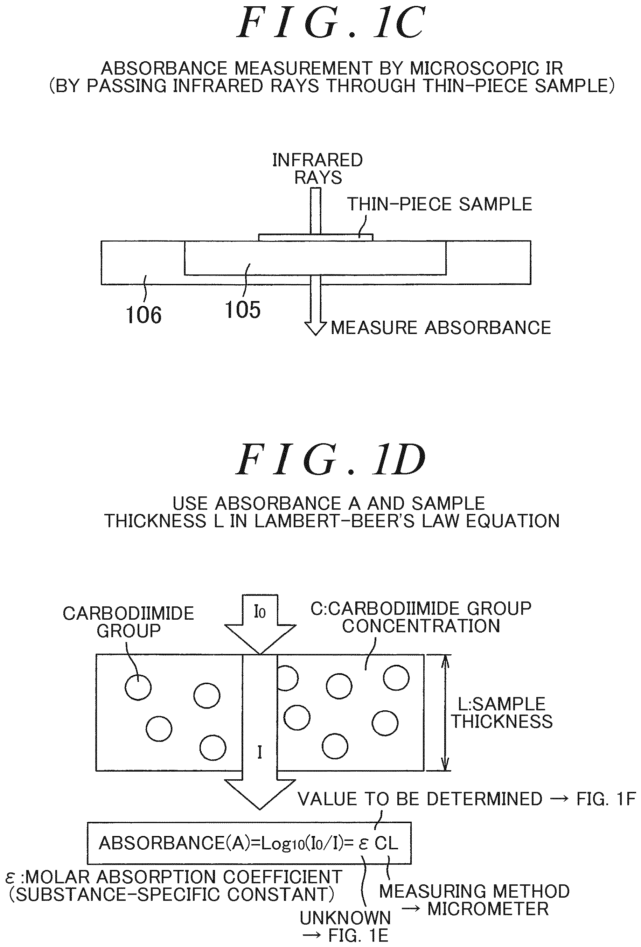

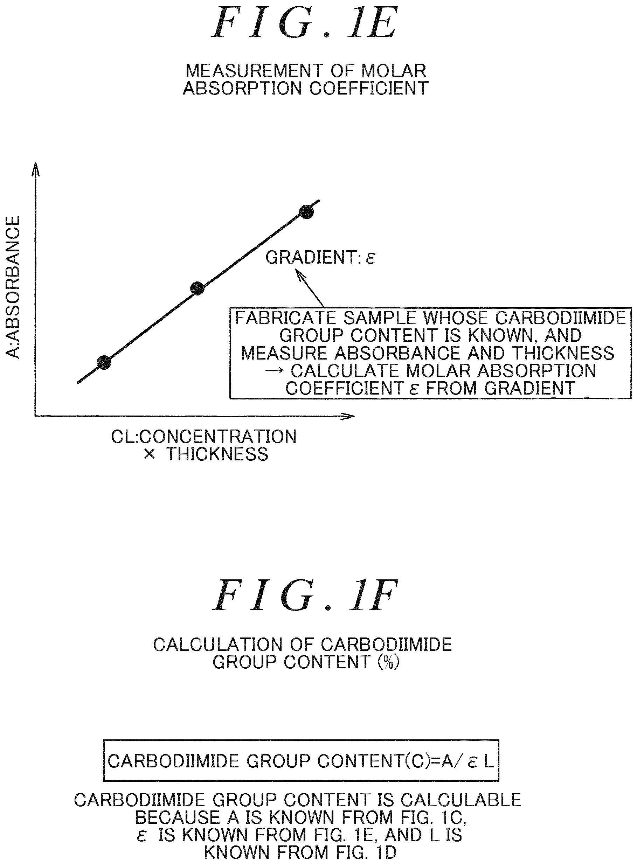

The carbodiimide group is a functional group represented by the following formula: (-N=C=N-). The percentage of the unreacted carbodiimide group(s) in the resin pellet according to this embodiment of the invention is 0.03% to 0.33% by mass, and preferably 0.06% to 0.25% by mass. The amount of carbodiimide group(s) contained in the resin pellet may be determined using Lambert-Beer's law in accordance with the procedure illustrated in FIGS. 1A to IF, for example.

The following description discusses the details of how the amount of carbodiimide group(s) contained in the resin pellet is determined. First, as illustrated in FIG. 1A, the resin pellet is set between clamps 102 of a microtome 101, and a thin piece is cut from the resin pellet by a knife 103, thus providing a thin-piece sample of a few or several tens of micrometers, for example. Alternatively, a thin piece may be cut from the resin pellet using a device other than a microtome. Subsequently, as illustrated in FIG. 1B, the thin-piece sample cut from the resin pellet is adjusted in thickness using a hand press 104. The thickness of the thin-piece sample is then measured by a measuring device, such as a micrometer.

Following the thickness adjustment, the thin-piece sample is placed on a KBr plate 105 and thus set on a base 106 of an infrared (IR) spectrophotometer as illustrated in FIG. 1C. Infrared rays are passed through the thin-piece sample so as to measure the peak intensity of the carbodiimide group (-N=C=N-) appearing in the vicinity of 2160 cm⁻¹. Thus, an absorbance (A) is determined. The absorbance (A) is expressed as (A) = Log₁₀(I₀/I). As illustrated in FIG. ID, the absorbance (A) determined and the thin-piece sample thickness L measured are then used in a Lambert-Beer's law equation as follows: A = Log₁₀(I₀/I) = εCL, where I₀ represents the intensity of incident light, I represents the intensity of transmitted light, ε represents the molar absorption coefficient of the carbodiimide group(s), and C represents the concentration of the carbodiimide group(s) in the thin-piece sample. The concentration C to be determined is expressed as follows: C = A/εL. A is known as a result of a measurement made by the IR spectrophotometer, and L is known as a result of a measurement made by the micrometer. This means that unknown ε is to be determined first.

As illustrated in FIG. IE, for example, determining the molar absorption coefficient ε involves cutting thin-pieces from pellets, whose carbodiimide group content (i.e., the concentration C) is known, so as to provide thin-piece samples, and measuring the thickness L and the absorbance A of each sample in accordance with the procedure illustrated in FIGS. 1A to ID. The values A and CL measured are plotted so as to obtain a gradient from the plots, thus determining the molar absorption coefficient ε.

The molar absorption coefficient ε determined, the absorbance A known, and the sample thickness L known are substituted into the following equation: C = A/εL. Thus, the amount of carbodiimide group(s) (-N=C=N-) contained in the resin pellet is determined. Because a carbodiimide group is not the only element contained in a carbodiimide group-containing compound, the amount of carbodiimide group(s) is estimated from the chemical structure and amount of a carbodiimide group-containing compound. The resin of the resin pellet according to this embodiment of the invention has a number average molecular weight Mn of 25,000 to 40,000. The number average molecular weight Mn of the resin is calculated by gel permeation chromatography (GPC) or solution viscosity method, for example.

The carbodiimide group(s) remain(s) in the resin pellet according to this embodiment of the invention. Thus, during injection molding of the resin pellet, the molding temperature thereof is utilized, so that the action of unreacted carbodiimide group(s) promotes the reaction of a terminal carboxyl group (-COOH) and/or an amino group (-NH₂) of the polyamide resin with the carbodiimide group(s), and promotes the reaction between the terminal carboxyl group (-COOH) and terminal amino group (-NH₂) of the polyamide resin. This enables a plurality of polyamide resin polymer chains made in advance by polymerization or a plurality of polyamide resin polymer chains connected to each other by the action of the carbodiimide group(s) during manufacturing of the resin pellet (which will be described below) to be further bound to each other in a chain-like manner. Consequently, the resin to be molded into a molded article will have a higher molecular weight.

The resin pellet according to this embodiment of the invention may contain a lubricant. The lubricant is not limited to any particular type of lubricant. Examples of the lubricant include the following known lubricants: metallic soaps, such as a metallic stearate; synthetic hydrocarbons, such as paraffin wax and synthetic polyethylene wax; fatty acids, such as a stearic acid; higher alcohols, such as a stearyl alcohol; higher aliphatic amides, such as a stearic acid amide and an oleic acid amide; esters, such as a higher fatty acid ester of an alcohol; and a silicone compound. Of these lubricants, higher aliphatic amides and a silicone compound are preferable lubricants to be used.

In this embodiment, any of the above known lubricants may be used. In particular, heat resistance conditions for the lubricant to be used are preferably such that the lubricant heated by TG-DTA at 10°C/min in a nitrogen atmosphere is reduced in weight by 10% at a temperature of 340°C or above. Suppose that the lubricants meeting these heat resistance conditions have definite melting points. In this case, the lubricant having a melting point of 200°C or above is preferably used. The resin pellet according to this embodiment of the invention may contain filler(s). Examples of the filler(s) include: short fiber fillers, such as glass fiber, carbon fiber, aramid fiber, cellulose fiber, poly(p-phenylenebenzobisoxazole) (PBO) fiber, polyarylate (PAR) fiber, and polytetrafluoroethylene (PTFE) fiber; plate-like fillers, such as glass flake; and micro reinforcing fillers, such as carbon nanotube and carbon nanofiber. One or more of these fillers may be contained in the resin pellet. Of these fillers, a short fiber filler is preferably used. Glass fiber is more preferably used as the filler. Organic fiber, such as aramid fiber, PBO fiber, PAR fiber, or PTFE fiber, is most preferably used as the filler.

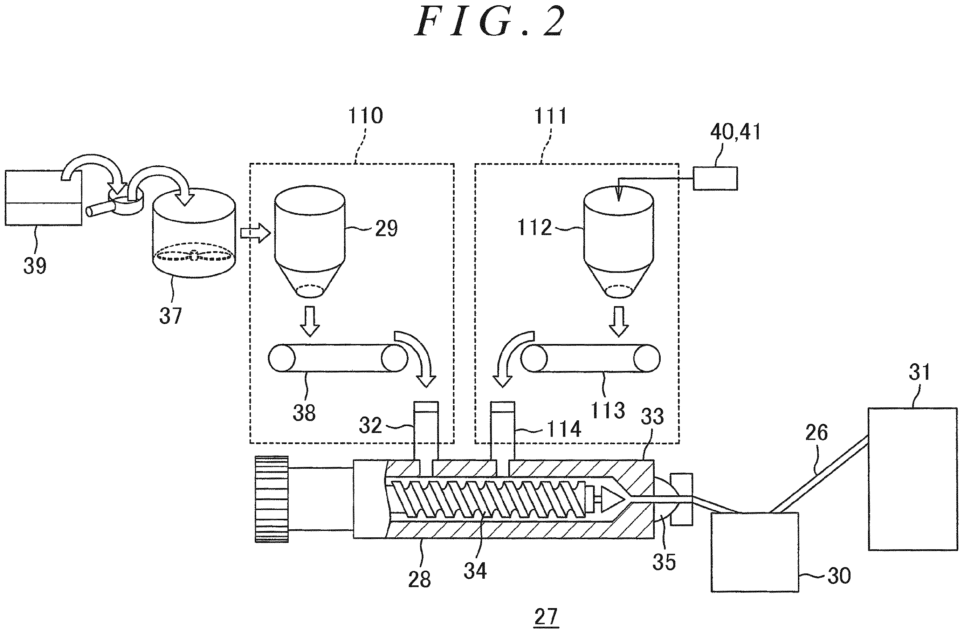

A method for manufacturing the resin pellet will be described below. FIG. 2 is a diagram illustrating a procedure for manufacturing resin pellets. A kneading machine 27 illustrated in FIG. 2, for example, is used to prepare resin pellets 26. The kneading machine 27 mainly includes a body 28, a cooling water tank 30, and a pelletizer 31, for example.

The body 28 includes a main feeder 110, a side feeder 111, a cylinder 33, a screw 34, and a nozzle 35. The side feeder 111 is disposed between the main feeder 110 and the nozzle 35. In other words, the side feeder 111 is disposed downstream of the main feeder 110. The body 28 is not limited to any particular configuration. The body 28 may be, for example, a known kneader, such as a two-shaft (or multi-shaft) extruder or single-shaft extruder.

The main feeder 110 includes a tank 29, a scale 38, and a slot 32. The side feeder 111 includes a tank 112, a scale 113, and a slot 114. An agitator 37 is disposed upstream of the tank 29. Raw materials mixed in the agitator 37 are passed through the tank 29 and the scale 38 located downstream thereof and are then fed into the slot 32 of the main feeder 110.

The first step in preparing the resin pellets 26 is to supply a polyamide resin 39 and an optional additive to the cylinder 33 from the main feeder 110 serving as a shared feeder. The polyamide resin 39 and the optional additive may be separately fed into the tank 29 and then supplied to the cylinder 33, or may be mixed in the agitator 37 and then supplied to the cylinder 33. Mixing the polyamide resin 39 and the optional additive in the agitator 37 involves dry blending and master batching.

Any of the polyamide resins described above may be used as the polyamide resin 39. The percentage of the polyamide resin 39 to the total amount of raw materials used in the preparation of the resin pellets 26 is, for example, 45% to 90% by mass. A lubricant is preferably used as the optional additive. Some lubricants produce an "intermolecular sliding effect", leading to a reduction in viscosity of raw materials of the resin pellets 26 during kneading. This enables kneading at a relatively low temperature. Thus, using such a lubricant as the optional additive controls the rate of reaction (or chain reaction) of the polyamide resin 39 during kneading of the polyamide resin 39, a filler 40, and a carbodiimide bond-containing compound 41 (which will hereinafter be simply referred to as "carbodiimide 41").

When a lubricant such as one of those described above is used, the percentage of the lubricant to the total amount of raw materials used in the preparation of the resin pellets 26 is, for example, 0.01% to 1% by mass. The polyamide resin 39 and the optional additive supplied to the cylinder 33 are kneaded by rotation of the screw 34. The polyamide resin 39 and the optional additive are kneaded, with the temperature of the cylinder 33 at 275°C to 325°C and the rotational speed of the screw 34 at 100 rpm to 500 rpm, for example.

The next step is to simultaneously supply the filler 40 and the carbodiimide 41 to the cylinder 33 from the side feeder 111 serving as a shared feeder. It is basically difficult to knead a high-molecular-weight polyamide resin with a filler. The method according to this embodiment, however, allows a resin to be kneaded in a low viscosity state, thus enabling the resin to mix with a filler.

Examples of the filler 40 to be used include those previously described.

When glass fiber, for example, is used as the filler 40, the glass fiber preferably has a diameter of 6 µm to 15 µm, and more preferably has a diameter of 6 µm to 8 µm. Using the glass fiber having a diameter falling within these ranges comparatively increases the area of contact between the glass fiber and the polyamide resin in each resin pellet 26. This favorably increases the mechanical strength and stiffness of the resulting molded article formed by molding the resin pellets 26.

The percentage of the glass fiber to the total amount of raw materials used in the preparation of the resin pellets 26 is, for example, 10% to 50% by mass.

When organic fiber is used as the filler 40, the diameter of the organic fiber is not limited to any particular diameter. The organic fiber has a diameter of 9 µm to 15 µm, for example. The percentage of the organic fiber to the total amount of raw materials used in the preparation of the resin pellets 26 is, for example, 5% to 25% by mass. Using the organic fiber within this range prevents aggregation so as to knead the raw resin with the organic fiber uniformly, while cutting down the amount of relatively expensive organic fiber. This effectively increases the wear resistance of the resin. The carbodiimide 41 to be used may be any compound that contains a carbodiimide group (-N=C=N-). The carbodiimide 41 may be monocarbodiimide containing a single carbodiimide group, or polycarbodiimide containing a plurality of carbodiimide groups. Any type of carbodiimide, such as aliphatic carbodiimide, aromatic carbodiimide or modified carbodiimide, may be used as the carbodiimide 41. Of these carbodiimides, aromatic carbodiimide is preferably used as the carbodiimide 41. One specific example of such carbodiimide commercially available is "Stabaxol P-100" manufactured by LANXESS. When the carbodiimide 41 is aromatic carbodiimide, its aromatic ring and adjacent functional group produce a steric hindrance effect, thus controlling the rate of reaction (or chain reaction) of the polyamide resin 39 during kneading of the polyamide resin 39, the filler 40, and the carbodiimide 41. This facilitates control operations for allowing the percentage of residual carbodiimide group(s) to each resin pellet 26 to be 0.03% to 0.33% by mass. The control operations include, for example, controlling the temperature of the cylinder 33, the time during which kneading is to be performed, and the pressure during kneading.

Suppose that the carbodiimide 41 is aliphatic carbodiimide and has no aromatic ring. The carbodiimide 41 in this case makes it difficult to achieve the above-mentioned steric hindrance effect produced by an aromatic ring and an adjacent functional group. The carbodiimide 41 in this case, however, achieves a similar effect when the carbodiimide 41 contains a lubricant. This is because, in such a case, the lubricant produces an intermolecular sliding effect as previously mentioned. In other words, when aliphatic carbodiimide is used as the carbodiimide 41, a lubricant such as one of those described above is preferably used in combination therewith. When aliphatic carbodiimide is used as the carbodiimide 41, employing a first technique described below favorably enables the percentage of residual carbodiimide group(s) to each resin pellet 26 to be 0.03% to 0.33% by mass. The first technique described below is provided by way of example only, and any other technique may be used.

The first technique includes step (1) involving disposing the side feeder 111 close to the nozzle 35. This reduces the time allowed for the reaction of the polyamide resin 39 induced by the action of the carbodiimide group(s). Thus, the reaction (or chain reaction) of the polyamide resin 39 is controlled.

The first technique further includes step (2) involving reducing the temperature set for the barrel of the kneading machine 27. Melting the polyamide resin 39 in the vicinity of the main feeder 110 at a temperature equal to or higher than the melting point of the polyamide resin 39 would enable the molten polyamide resin 39 to flow if the temperature set for a region downstream of the main feeder 110 is low. Thus, reducing the temperature set for the barrel controls the reaction (or chain reaction) of the polyamide resin 39.

The first technique further includes step (3) involving reducing the number of revolutions set for the kneading machine 27. Reducing the number of revolutions decreases shearing heat applied to the resin, thus controlling the reaction (or chain reaction) of the polyamide resin 39.

The first technique further includes step (4) involving providing the kneading machine 27 with the screw and kneading disks having a low-shearing configuration. This means that, for example, the ratio of kneading disks to the screw (i.e., the number of kneading disks) may be reduced, or kneading disks small in width may be used. Consequently, the effect of kneading is lessened, thus controlling the reaction (or chain reaction) of the polyamide resin 39.

The number average molecular weight Mn of the carbodiimide 41 is preferably relatively high. The number average molecular weight Mn of the carbodiimide 41 is 3,000 to 25,000, for example. The percentage of the carbodiimide 41 to the total amount of raw materials used in the preparation of the resin pellets 26 is, for example, 0.5% to 4% by mass. Using the carbodiimide 41 within this range favorably provides a final molded article whose number average molecular weight Mn is 30,000 or more. Because the carbodiimide 41 is not excessive in amount, this embodiment of the invention reduces the risk of, for example, an increase in resin pressure (or viscosity) during kneading, heat generation during kneading, thermal decomposition of the polyamide resin 39 and the carbodiimide 41 associated with the heat generation, and a reduction in strength of adhesion of the filler 40 to the resin caused by convergence degradation associated with the heat generation.

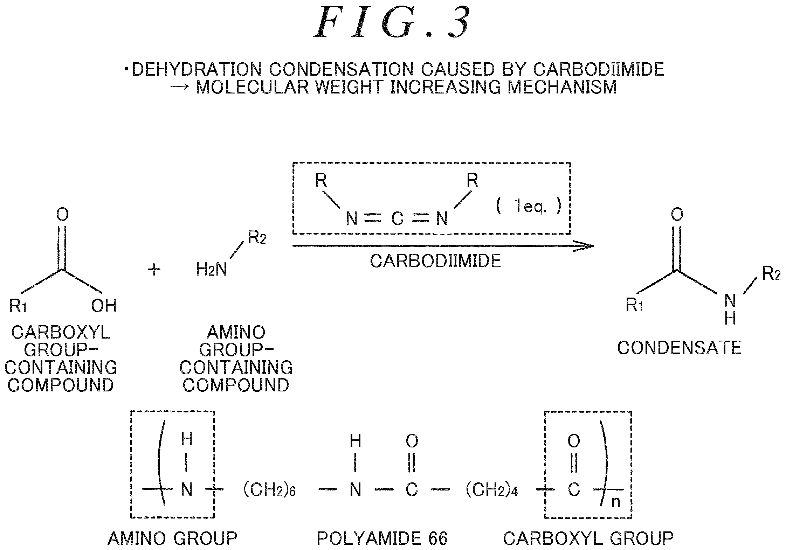

When the carbodiimide 41 is powder, the carbodiimide 41 may be supplied independently through the side feeder 111, or may be mixed with a polyamide resin and then supplied through the side feeder 111. Mixing the carbodiimide 41 with the polyamide resin involves dry blending and master batching. The filler 40 and the carbodiimide 41 are added to a kneaded mixture of the polyamide resin 39 and the optional additive being conveyed through the cylinder 33, so that the polyamide resin 39, the optional additive, the filler 40, and the carbodiimide 41 are subjected to further kneading so as to provide a kneaded mixture of these substances. The time between the supply of the carbodiimide 41 and the ejection of the kneaded mixture from the nozzle 35 (which will hereinafter be referred to as a "kneading time for the carbodiimide 41") ranges from one second to one minute, for example. Accordingly, the distance between the side feeder 111 and the nozzle 35 may be set in accordance with the kneading time for the carbodiimide 41. As illustrated in FIG. 3, the supply of the carbodiimide 41 promotes the reaction of a terminal carboxyl group (-COOH) and/or an amino group (-NH₂) of the polyamide resin 39 (which is polyamide 66 in FIG. 3) with carbodiimide group(s), and promotes the reaction between the terminal carboxyl group (-COOH) and terminal amino group (-NH₂) of the polyamide resin 39. This enables polymer chains of the polyamide resin 39 to bond to each other in a chain-like manner.

Following the supply of the carbodiimide 41, the kneaded mixture is ejected in the form of a strand from the nozzle 35, solidified by being cooled in the cooling water tank 30, and then pelletized by the pelletizer 31. Carrying out these steps provides the resin pellets 26 each containing the polyamide resin 39, with the filler 40 dispersed therein. Each resin pellet 26 thus provided contains 0.03% to 0.33% of unreacted carbodiimide group(s) (i.e., residual carbodiimide) by mass. The term "unreacted carbodiimide group(s)" refers to carbodiimide group(s) that has/have not reacted during the kneading process previously described. Feeding the carbodiimide 41 from the side feeder 111 allows the unreacted carbodiimide group(s) to remain in each resin pellet 26. In this case, the carbodiimide 41 is allowed to favorably remain in each resin pellet 26 by, for example, appropriately selecting the type of carbodiimide to be used as the carbodiimide 41, adjusting the number average molecular weight Mn of the carbodiimide 41, and deciding whether the carbodiimide 41 should contain a lubricant. The types of carbodiimide to be used as the carbodiimide 41 include aromatic carbodiimide and aliphatic carbodiimide.

The number average molecular weight Mn of each resin pellet 26 provided is, for example, 25,000 to 40,000. The above-described manufacturing procedure involves supplying the carbodiimide 41 to the cylinder 33 from the side feeder 111. This limits the time allowed for the reaction of the polyamide resin 39 induced by the action of the carbodiimide group(s). If the carbodiimide 41 is supplied from the main feeder 110, the reaction of the polyamide resin 39 proceeds while the resin being kneaded is conveyed substantially from end to end of the cylinder 33. This embodiment, however, shortens the distance allowed for the reaction of the polyamide resin 39 so that the reaction of the polyamide resin 39 occurs only between the side feeder 111 and the nozzle 35, thus limiting the time allowed for the reaction of the polyamide resin 39. Consequently, this embodiment easily causes the unreacted carbodiimide group(s) to remain in each resin pellet 26 provided.

The above procedure involves supplying the carbodiimide 41 in the course of kneading of the polyamide resin 39 and the filler 40. This reduces the occurrence of disadvantageous conditions, such as excessive torque, heat generation, and strand tearing in the body 28, and unfavorable resinous attachments to the body 28, more effectively than when the polyamide resin 39, the filler 40, and the carbodiimide 41 are simultaneously supplied to the cylinder 33 so as to start kneading or when the polyamide resin 39 and the carbodiimide 41 are simultaneously supplied to the cylinder 33 from the main feeder 110 (i.e., the preceding one of the feeders) so as to start kneading. Consequently, this embodiment enables stable production of the resin pellets 26.

Although the above description has been predicated on the assumption that the carbodiimide 41 is supplied from the side feeder 111, the carbodiimide 41 may alternatively be supplied from the main feeder 110. In such a case, using a second technique described below favorably enables the percentage of residual carbodiimide group(s) to each resin pellet 26 to be 0.03% to 0.33% by mass. The second technique described below is provided by way of example only, and any other technique may be used.

The second technique includes step (1) involving performing at least one of steps (2) to (4) of the first technique employed in using aliphatic carbodiimide as the carbodiimide 41.

The second technique further includes step (2) involving disposing a highly sterically hindering functional group, such as an isopropyl group, on the periphery of the carbodiimide group(s) when aromatic carbodiimide is used as the carbodiimide 41.

Using the second technique controls the rate of reaction of the carbodiimide 41 (i.e., the ease of reaction between the carbodiimide group(s) and polyamide). Suppose that a lubricant is used in one of the steps. In this case, the lubricant heated by TG-DTA at 10°C/min in a nitrogen atmosphere is reduced in weight by 10% at a temperature of 340°C or above, thus achieving an effect described below. Specifically, the temperature of the cylinder 33 is set in the range of, for example, 275°C to 325°C during kneading of the resin in the cylinder 33. Setting the temperature of the cylinder 33 at a high temperature in this range (i.e., at a temperature of 300°C or above) enables a reduction in viscosity by addition of the lubricant so as to produce the effect of improving kneadability and moldability, although black spots are likely to occur in the resin. The occurrence of such black spots is caused by decomposition, gasification, and carbonization of the lubricant that are induced by a heat history during kneading of the resin, for example. Such black spots may hinder the growth of necking of the resin and cause breaking of the resin to proceed from the black spots, resulting in a reduction in mechanical strength (e.g., tensile elongation at break) of the resin. One conceivable solution to the occurrence of black spots is to utilize, for example, image analysis so as to mechanically remove (or screen out) resin pellets having black spots, and another conceivable solution is to screen out, before shipment, molded articles having black spots. Unfortunately, either of these solutions leads to an increase in cost or a reduction in yield.

To solve such problems, this embodiment of the invention involves the use of a lubricant that meets the heat resistance conditions previously mentioned. This would reduce or eliminate the occurrence of black spots if the resin is kneaded at a temperature as high as 300°C or above. Such an advantage reduces breaking of the resin that proceeds from the black spots. Thus, with an increase in molecular weight of the resin, the mechanical strength of the resin is maintained at a favorable level. Because what is needed for this solution is to simply select the type of lubricant to be used, the step of screening out resin pellets, for example, is unnecessary, resulting in no increase in cost or no reduction in yield.

The resin pellets thus provided are usable for any type of structural member (or molded article) whose constituents include a polyamide resin. Examples of such structural members include various resin gears, various bearing cages, and various housings. Specific examples of such structural members include a worm wheel, a worm housing and a sensor housing for a power steering system, a resin-wound guide bearing for a sliding door, and a housing for an electric oil pump. The usage of the resin pellets according to this embodiment of the invention is not limited to these specific examples.

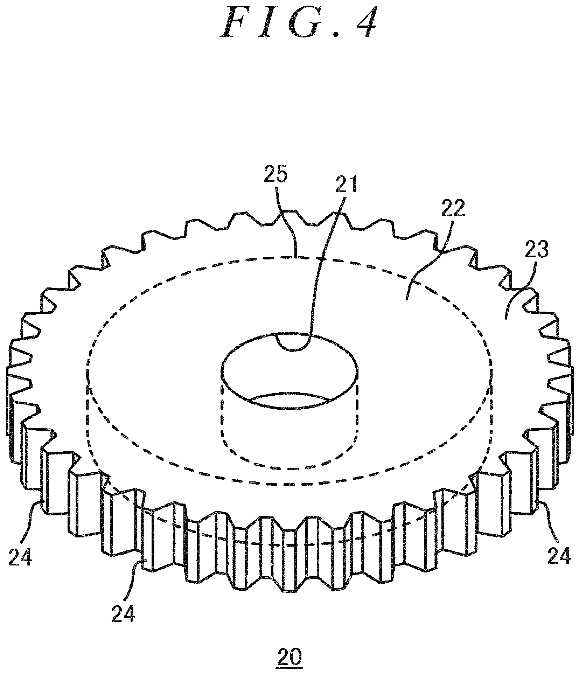

An exemplary molded article formed from the resin pellets according to this embodiment of the invention will be described below with reference to the accompanying drawings. FIG. 4 is a diagram schematically illustrating a gear 20 according to an embodiment of the invention. The gear 20 is a one-piece resin molded article. The gear 20 is provided in its center with a through hole 21. The gear 20 is provided on its outer periphery with teeth 24. The gear 20 does not necessarily have to be molded in one piece. The gear 20 may include, for example, a metal sleeve 22, and a resin toothed portion 23 firmly attached to the sleeve 22. In this case, the toothed portion 23 may be formed from the resin pellets 26.

The gear 20 thus described is usable not only as a worm wheel for a power steering system but also as any of various other gears, such as a bevel gear and a helical gear. The manufacture of the gear 20 involves, for example, preparing a mold (not illustrated), melting the resin pellets 26 provided by following the procedure illustrated in FIG. 2, and injecting the molten resin pellets 26 into the mold. The mold may be configured so that the resin pellets 26 are molded into a cylindrical structure made up of a plurality of the gears 20 cylindrically continuous with each other. The molten resin pellets 26 are subsequently cooled for a predetermined period of time and thus solidified into a cylindrical structure made up of the gears 20. The cylindrical structure made up of the gears 20 is then removed from the mold. The gears 20 each having a disk shape are cut from the cylindrical structure one by one. Each gear 20 is finally subjected to gear cutting so that the teeth 24 are formed thereon, thus providing the gear 20 illustrated in FIG. 4.

In the course of manufacture of the resin pellets 26 illustrated in FIG. 2, the chain reaction of the polyamide resin in the resin pellets 26 is still in progress as previously mentioned, and the molecular weight of the resin pellets 26 yet to be molded is lower than the molecular weight of the final molded article. The polyamide resin in the course of manufacture of the resin pellets 26 is relatively low in viscosity. This facilitates molding and thus makes it unnecessary to excessively raise the molding temperature. Consequently, thermal decomposition of the resin is controlled so as to reduce molecular weight variations and property variations among the molded articles.

This embodiment intentionally causes the percentage of residual unreacted carbodiimide group(s) to each resin pellet 26, provided by following the procedure illustrated in FIG. 2, to be 0.03% to 0.33% by mass. As illustrated in FIG. 3, utilizing the molding temperature during injection molding of the resin pellets 26, the action of the unreacted carbodiimide group(s) promotes the reaction of a terminal carboxyl group (-COOH) and/or an amino group (-NH₂) of the polyamide resin 39 (which is polyamide 66 in FIG. 3) with the carbodiimide group(s), and promotes the reaction between the terminal carboxyl group (-COOH) and terminal amino group (-NH₂) of the polyamide resin 39. This enables a plurality of polymer chains of the polyamide resin 39 made in advance by polymerization or a plurality of polymer chains of the polyamide resin 39 connected to each other under the action of the carbodiimide group(s) during preparation of the resin pellets 26 to be further bound to each other in a chain-like manner, resulting in an increase in molecular weight of the resin. Consequently, the number average molecular weight Mn of the resulting gear 20 increases up to 30,000 or more, for example.

In this embodiment, the step of kneading raw materials of the resin pellets 26 and the step of molding the resin pellets 26 are regarded as a series of heating steps. Throughout the series of heating steps, the chain reaction of the polyamide resin 39 is allowed to proceed to an appropriate level so as to increase the molecular weight of the polyamide resin 39 to an unprecedented level. This keeps the chain reaction of the polyamide resin 39 from proceeding excessively just in the step of kneading raw materials of the resin pellets 26, and thus prevents the reaction of the polyamide resin 39 from becoming so excessive that the polyamide resin 39 is decomposed in the subsequent step of molding the resin pellets 26.

The chain reaction of the polyamide resin 39 in the resin pellets 26 yet to be molded is still in progress, and the molecular weight of the resin pellets 26 yet to be molded is lower than the molecular weight of the final molded article (e.g., the resulting gear 20). The number average molecular weight Mn of the gear 20 is, for example, 30,000 or more, while the number average molecular weight Mn of the resin pellets 26 is, for example, 25,000 to 40,000. The polyamide resin 39 in the resin pellets 26 yet to be molded is relatively low in viscosity. This facilitates molding and thus makes it unnecessary to excessively raise the molding temperature. Consequently, thermal decomposition of the resin is controlled so as to reduce molecular weight variations and property variations among the molded articles (or gears 20).

The resin pellets 26 are moldable in a relatively low viscosity state. This would allow the resin to be favorably filled into the mold if an injection molding machine, for example, has a small gate diameter. In the step of kneading raw materials of the resin pellets 26, the filler 40 is naturally favorably dispersible throughout the polyamide resin 39 whose molecular weight is not high (or whose viscosity is low) before the carbodiimide 41 is fed. Organic fiber, in particular, is soft and thus unlikely to break, making it generally difficult to knead a high viscosity, high molecular weight molten resin with organic fiber. Kneading a high molecular weight molten resin with organic fiber requires, for example, increasing the number of revolutions of a kneading machine and/or increasing the temperature set for a barrel, thus reducing the viscosity of the resin so as to effect a reduction in kneading torque. Such a technique causes resin decomposition to proceed owing to heat generation, leading to a reduction in molecular weight. This makes it difficult to take advantage of properties of a high molecular weight resin, such as high wear resistance. In other words, uniformly mixing organic fiber, which is unlikely to damage an associated component and contributes to an increase in wear resistance of a resin, by the technique known in the art makes it difficult to increase the molecular weight of a resin. Giving higher priority to increasing the molecular weight of a resin makes it difficult to uniformly mix organic fiber. The method according to this embodiment, however, makes it possible to knead a resin in a low viscosity state. This enables an increase in molecular weight of the resin while uniformly dispersing organic fiber in the resin. When organic fiber is used, carbodiimide group(s) react(s) not only with a polyamide resin but also with the organic fiber. In an example where aramid fiber, for example, is used, carbodiimide group(s) react(s) with an amido group in the aramid fiber. Thus, using organic fiber in the method according to this embodiment achieves the effect of increasing the strength of adhesion between the polyamide resin and the organic fiber. Consequently, the wear resistance of the resulting molded article is higher than when no organic fiber is added.

As described thus far, this embodiment provides the gear 20 having high mechanical strength and wear resistance. More specifically, the embodiment of the invention provides mechanical strength, stiffness, and dimensional stability required for the gear 20. The number average molecular weight Mn of the resin is 30,000 or more, resulting in high resistance to crack extension. The high resistance to crack extension would reduce the speed of crack extension if the filler 40 triggers crack-inducing resin wear and/or flaking. Consequently, this embodiment reduces the wear volume of the teeth 24 and thus achieves wear resistance required for the teeth 24.

These advantages serve to prevent an increase in variation in the inter-core distance between the gear 20 and an associated component. Suppose that the gear 20 is used as a worm wheel for a speed reducer of a power steering system. In this case, rattling sounds will not be produced because a variation in the inter-core distance between the worm wheel and a worm does not increase, and in addition, durability and life of the worm wheel will increase. Worm wheels, in particular, may be expected to be further reduced in size and increasingly used in higher power applications in the future. This will increase loads to an unprecedented level and will result in application of large torques to the worm wheels. Worm wheels having poor wear resistance will have reduced durability and life due to application of such large torques. When the gear 20 according to this embodiment is used as a worm wheel, the worm wheel has high wear resistance as described above and is thus adequately adaptable to future applications where the worm wheel needs to be smaller in size and is intended for higher power use. The gear 20 manufactured using the resin pellets 26 containing organic fiber has increased wear resistance and is unlikely to damage an associated component. Organic fiber is lower in Mohs hardness than glass fiber. Thus, if sliding of the gear 20 causes organic fiber to be exposed at the surface of the gear 20, the gear 20 would be prevented from wearing away the surface of an associated component. When the gear 20 is used as a worm wheel, for example, a component associated with the gear 20 is a worm. Suppose that sliding contact between the gear 20 and an associated component causes organic fiber to come off the gear 20. In this case, the organic fiber that has come off the gear 20 will not wear away the gear 20. Accordingly, the resin pellets 26 containing organic fiber are favorably used in manufacturing a molded article (e.g., a sliding member) that is particularly required to have a low probability of damaging an associated component and have high wear resistance. Using the organic fiber-containing resin pellets 26 in manufacturing the gear 20 to be used as a worm wheel prevents wearing away of a metal worm that is a component associated with the gear 20. This makes it unnecessary to perform, for example, induction heat treatment for increasing the hardness of the worm, so that an increase in manufacturing cost is prevented. Using the organic fiber-containing resin pellets 26 in manufacturing a resin-wound guide bearing (or roller) for a sliding door prevents peeling off of a coating on a vehicle body that is a component associated with the guide bearing (or roller). This makes it unnecessary to attach an additional component, such as a guide rail, to the sliding door, so that an increase in manufacturing cost is prevented as in the case of using the organic fiber-containing resin pellets 26 in manufacturing the gear 20 to be used as a worm wheel. Suppose that a molded article to be manufactured is a container (e.g., a housing such as one previously described) that will not come into contact with any particular component and is required to have high mechanical strength and stiffness rather than high wear resistance. In such a case, the resin pellets 26 containing glass fiber may be used. In other words, an appropriate selection may be made between using the resin pellets 26 containing organic fiber and using the resin pellets 26 containing glass fiber in accordance with the usage of a molded article to be manufactured and characteristics required for the molded article.

Although the embodiment of the invention has been described thus far, the invention may be practiced in other embodiments.

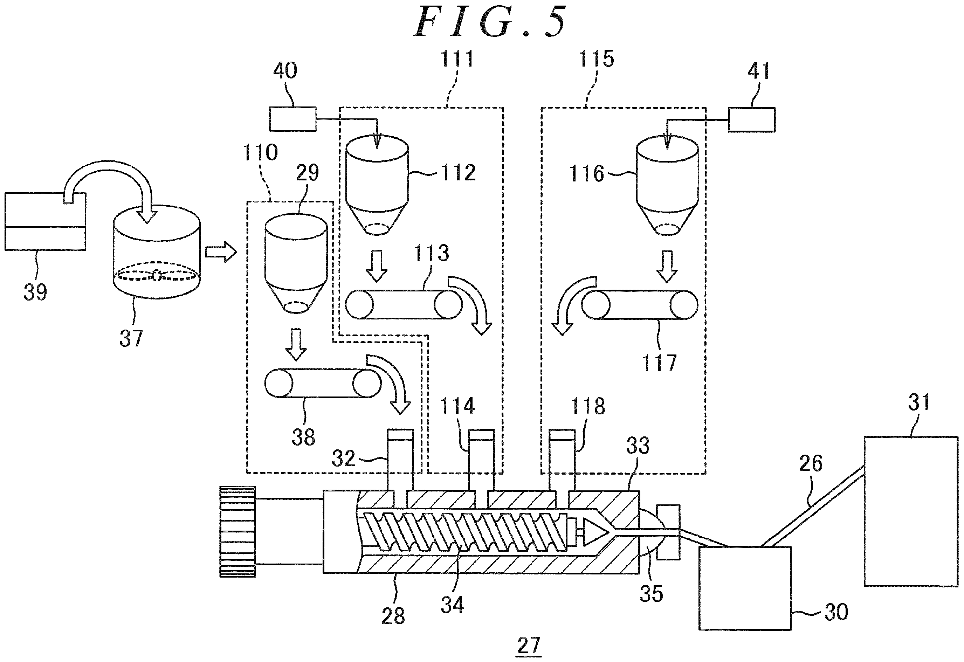

In one example, the body 28 of the kneading machine 27 may include two side feeders as illustrated in FIG. 5. The body 28 of the kneading machine 27 may include, for example, a second side feeder 115 downstream of the side feeder 111. The second side feeder 115 includes a tank 116, a scale 117, and a slot 118. In this example, the polyamide resin 39 is supplied independently through the main feeder 110, the filler 40 is supplied through the side feeder 111, and the carbodiimide 41 is supplied through the second side feeder 115.

The filler 40 may be supplied to the cylinder 33 from the main feeder 110 together with the polyamide resin 39. In such a case, the position from which the filler 40 is to be supplied is upstream of the position from which the carbodiimide 41 is to be supplied. Thus, the filler 40 is supplied before an increase in molecular weight induced by the action of carbodiimide group(s) starts, i.e., when the viscosity of the resin is lower. This further enhances dispersion of the filler 40. Suppose that the filler 40 is organic fiber. In this case, if the filler 40 is supplied in an initial stage of kneading, the organic fiber would keep its shape, because the organic fiber is soft and unlikely to break. The molded article manufactured by the method according to the embodiment of the invention may contain no filler. Various other design modifications may be made within the scope of the claims.

The invention will be further described below in relation to Examples 1 to 8, Comparative Example 1, and Reference Examples 1 and 2. The invention is not limited to the examples described below.

### Examples 1 to 8, Comparative Example 1, and Reference Examples 1 and 2

In accordance with the data given in Table 1 below, raw materials were supplied to the kneading machine 27 arranged as illustrated in FIG. 2, thus preparing resin pellets. The resin pellets prepared were then molded into test samples.

### Commercial Product 1

Polyamide 66 manufactured by Asahi Kasei Corp. (e.g., non-reinforced grade "Leona 1502S") was molded into a test sample. Neither glass fiber nor carbodiimide was added.

### Commercial Product 2

Polyamide 66 manufactured by BASF (e.g., "A5H") was molded into a test sample. Neither glass fiber nor carbodiimide was added.

### Commercial Product 3

Polyamide 66 manufactured by DuPont (e.g., "Zytel® E51HSB NC010") was molded into a test sample. Neither glass fiber nor carbodiimide was added.

### Evaluation Test

### (1) Amount of Residual Carbodiimide

The amount of residual carbodiimide contained in the resin pellets provided by Examples 1 to 8 and Reference Example 2 was measured by following the procedure illustrated in FIGS. 1A to IF. The results of the measurement are shown in Table 1. In Table 1, the column "Functional Group" gives the amount of carbodiimide group(s) itself or themselves contained in each resin pellet, and the column "Calculated in Terms of Compound" gives the amount of residual carbodiimide group(s) calculated in terms of carbodiimide compound used.

Table 1 suggests that when no lubricant is contained, using aromatic carbodiimide as in Examples 1 to 8 enables the percentage of residual carbodiimide group(s) to each resin pellet to be 0.03% to 0.33% by mass. Using aliphatic carbodiimide as in Reference Example 2 causes almost all of carbodiimide groups to be consumed at the time when resin pellets are prepared, so that the percentage of residual carbodiimide to each resin pellet is 0.01% by mass.

The comparison between Example 2 and Example 5 reveals that the amount of residual carbodiimide group(s) when a carbodiimide compound is added from the side feeder is larger than the amount of residual carbodiimide group(s) when a carbodiimide compound is added from the main feeder, assuming that the amount of carbodiimide compound added in both cases is the same.

### (2) Number Average Molecular Weight Mn

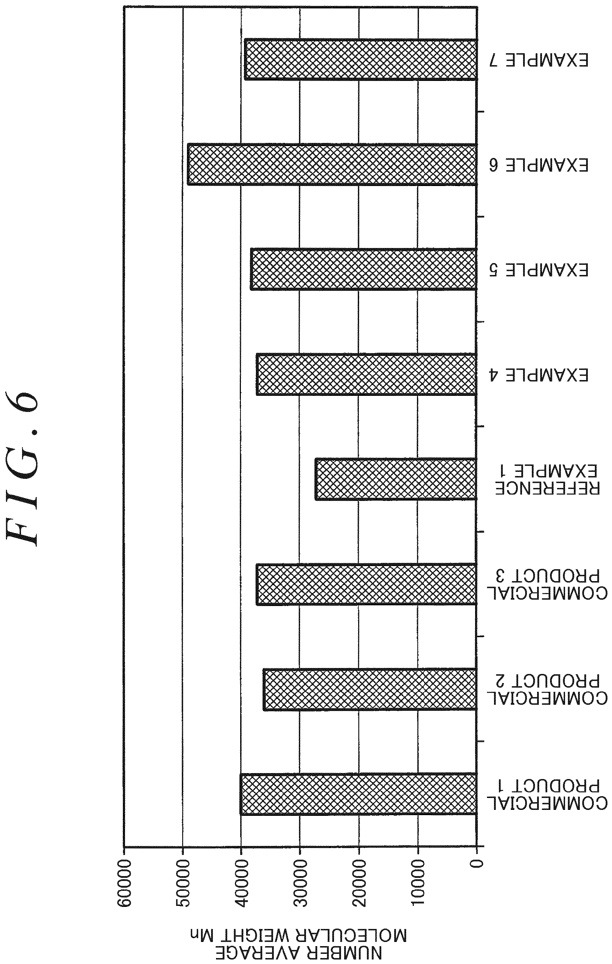

For each test sample, the number average molecular weight Mn was measured by gel permeation chromatography (GPC). The results of the measurement are given in Table 1 and FIG. 6. The measurement result for Reference Example 2 is not given in FIG. 6. The results suggest that when the amount of residual carbodiimide is in the range of 0.03% to 0.33% by mass as in Examples 4 to 7, the resulting molecular weight is increased to a level substantially equal to the level of molecular weight of each of Commercial Products 1 to 3 having high molecular weights.

### (3) Time-Varying Changes in Number Average Molecular Weight Mn

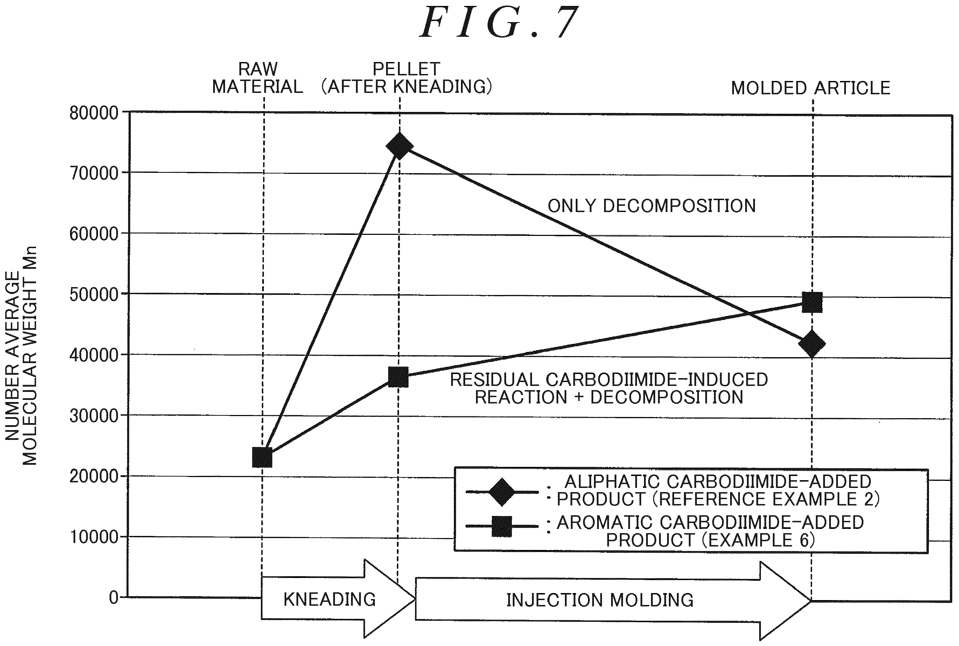

FIG. 7 is a graph illustrating time-varying changes in the number average molecular weight Mn of the test sample when aromatic carbodiimide is used, and time-varying changes in the number average molecular weight Mn of the test sample when aliphatic carbodiimide is used. FIG. 7 shows that the number average molecular weight Mn measured for Example 6 in which aromatic carbodiimide is used is increased to about 36,000 at the time when the resin pellets are provided. FIG. 7 also shows that the number average molecular weight Mn then continues to increase during molding and reaches 49,000 when a final molded article is provided. This is believed to be due to the fact that the chain reaction of polyamide 66 induced by the action of carbodiimide group(s) also proceeds during molding so as to control resin thermal decomposition. As for Reference Example 2 in which aliphatic carbodiimide is used, virtually no carbodiimide group that contributes to the chain reaction of polyamide 66 remains at the time when the resin pellets are provided. This promotes resin thermal decomposition, resulting in a sharp reduction in the number average molecular weight Mn.

### (4) Tensile Elongation at Break and Tensile Strength

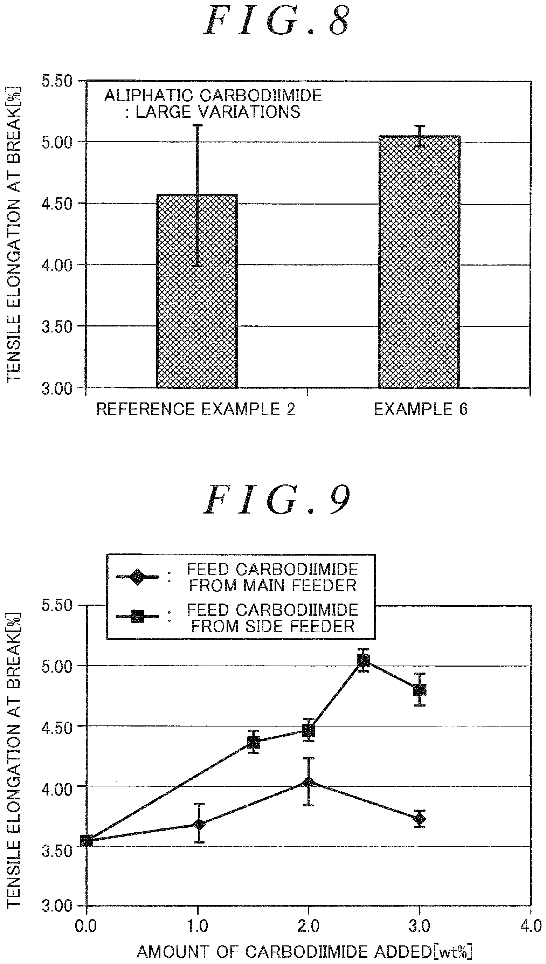

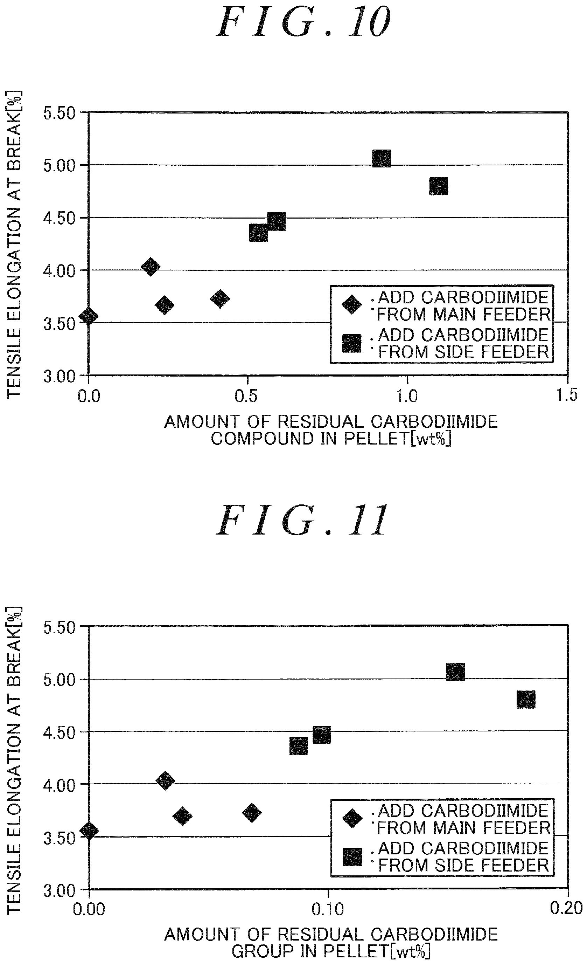

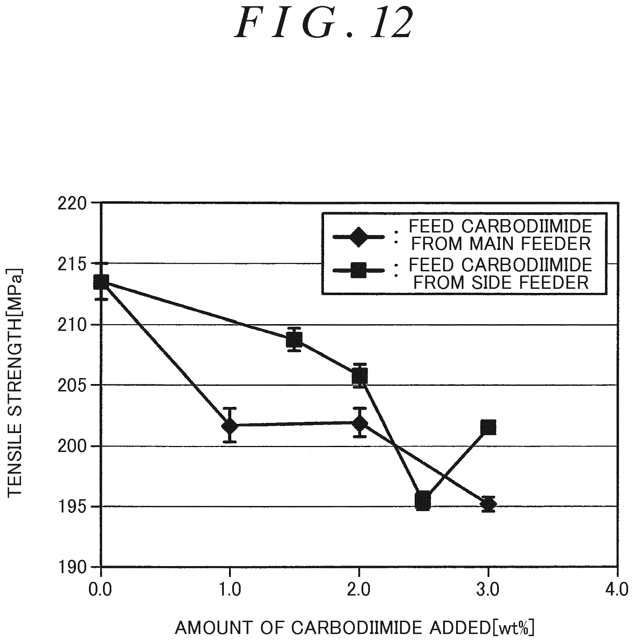

For Examples 1 to 8 and Reference Example 2, tensile elongation at break and tensile strength were measured in conformity with JIS K 7161. The results of the measurement are given in Table 1 and FIGS. 8 to 12. FIG. 8 shows that Example 6 and Reference Example 2 both exhibit relatively high tensile elongation at break, but the range of variation in tensile elongation at break observed for Reference Example 2 is greater than the range of variation in tensile elongation at break observed for Example 6.

Table 1 reveals that adding a carbodiimide compound from the main feeder as in Examples 1 to 3 achieves high tensile elongation at break, particularly when the amount of residual carbodiimide is 0.03% by mass as in Example 2. Table1 further reveals that adding a carbodiimide compound from the side feeder as in Examples 4 to 7 achieves high tensile elongation at break, particularly when the amount of residual carbodiimide is 0.15% by mass as in Example 6.

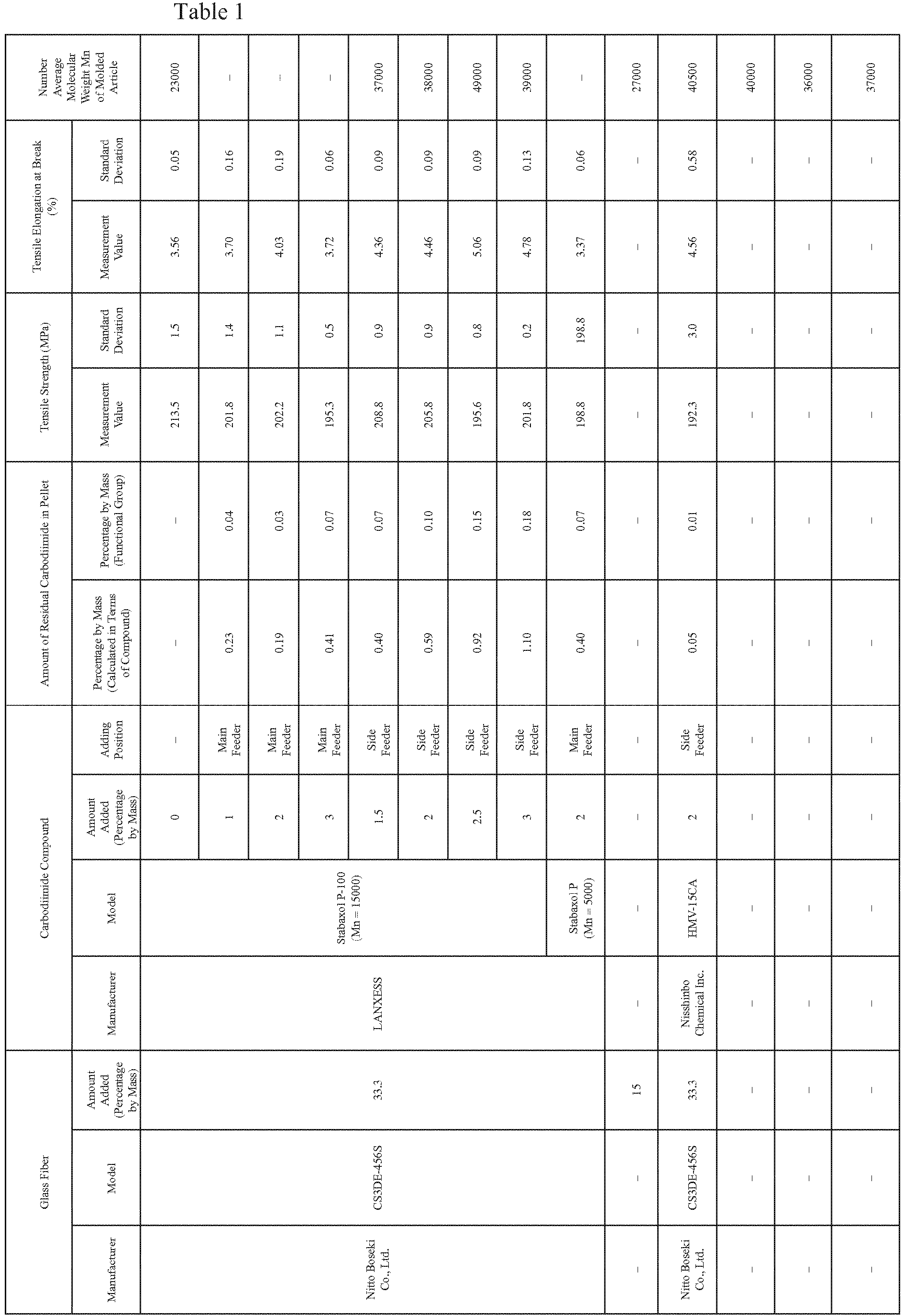

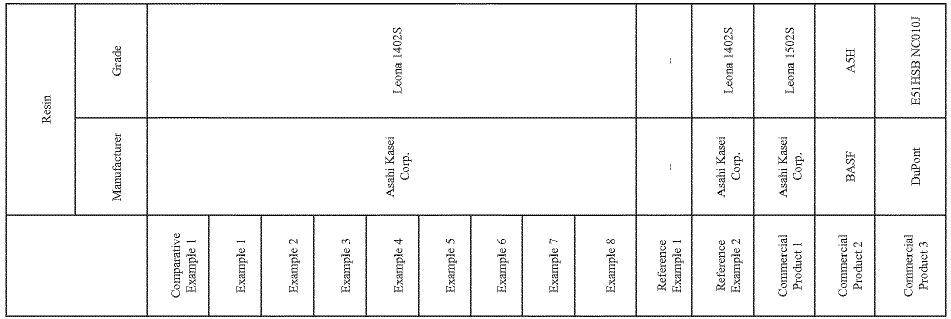

Referring to Reference Examples 3 to 8, the following description discusses how the frequency of occurrence of black spots in the resin and the tensile elongation at break of the resin change depending on heat resistance conditions for lubricants. Specifically, polyamide 66 manufactured by Asahi Kasei Corp. under the product name "Leona 1702" was kneaded with each lubricant described in Table 2, with the temperature of the cylinder set at 300°C during kneading. Thus, resin pellets were prepared. The resin pellets prepared were then molded into test samples.

### (1) Tensile Elongation at Break

For Reference Examples 3 to 8, tensile elongation at break was measured in conformity with JIS K 7161. The results of the measurement are given in Table 2.

### (2) Frequency of Occurrence of Black Spots

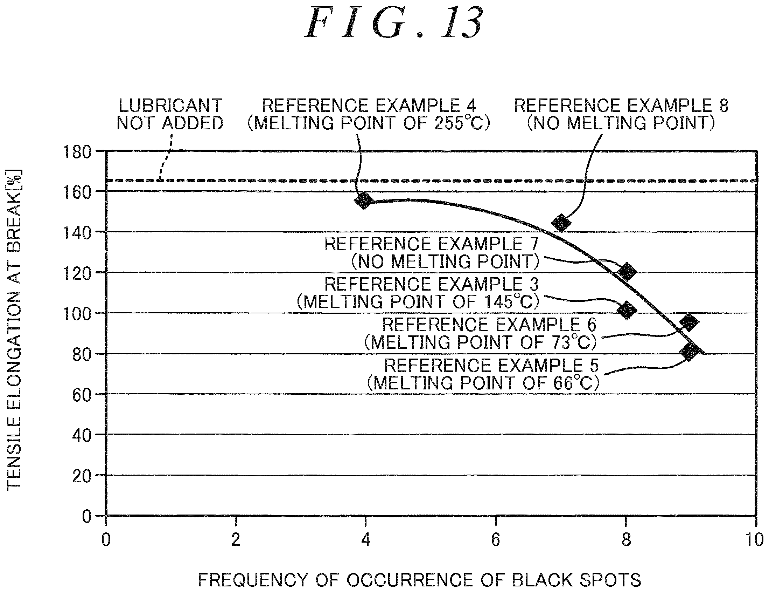

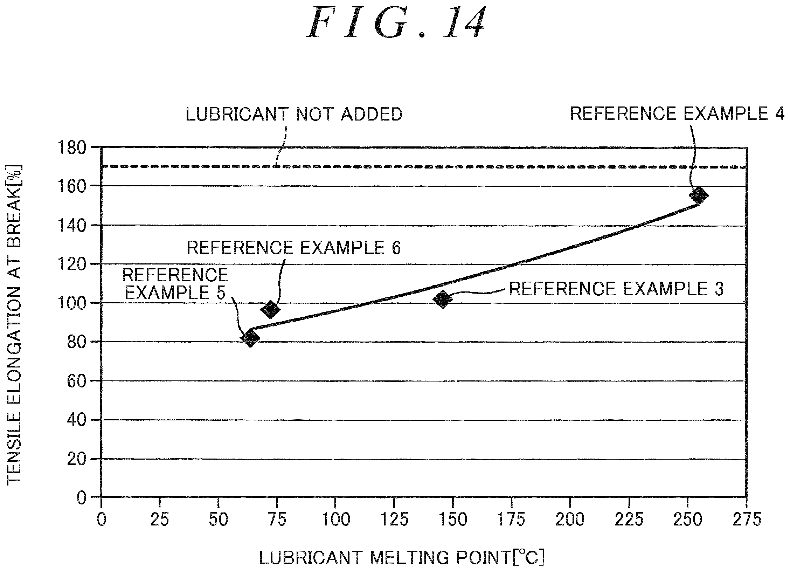

After the test of tensile elongation at break just mentioned, we made observations to determine whether a black spot occurred at each broken surface. The number of samples n for each reference example was five. We estimated the frequency of occurrence of black spots by giving two points to each sample with a black spot having a size of 100 mm or more, giving one point to each sample with a black spot having a size of less than 100 mm, and giving zero point to each sample with no black spot. The sum of points given to the five samples for each reference example was determined to be the measurement result for each reference example. The sum of points given to the five samples for each reference example is 10 points at the maximum. FIG. 13 illustrates the relationship between the results obtained and tensile elongation at break. FIG. 14 illustrates the relationship between the melting point of each lubricant and tensile elongation at break.

**Table 2**

| | Lubricant | | TG Reduction Temperature (°C) | | Weight Reduction Percentage at 325°C for One Hour | Melting Point (°) | Number of Black Spots in 10 g of Pellet | Tensile Elongation at Break (%) |
|---|---|---|---|---|---|---|---|---|
| | Manufacturer | Model | 8% Weight Reduction | 10% Weight Reduction | | | | |
| Reference Example 3 | Kao Corporation | KAO WAX (Ethylene Bis Stearamide (EBS)) | 326.1 | 363.8 | 79.1% | 145 | 42 | 102.5 |
| Reference Example 4 | Kyoeisha Chemical Co., Ltd | Light Amide WH-255 (Heat-Resistant Ethylene Bis Stearamide (EBS)) | 325.2 | 357.0 | 52.1% | 255 | 10 | 154.8 |
| Reference Example 5 | RIKEN VITAMIN Co, Ltd. | RIKEMAL S-100A (Glycerate) | 245.8 | 263.9 | - | 66 | 66 | 82.5 |
| Reference Example 6 | Mitsubishi Chemical Corporation | DIACARNA 30M (Maleic Anhydride Polyolefin) | 287.4 | 326.0 | - | 73 | 62 | 96.0 |
| Reference Example 7 | Nissin Chemical Industry Co, Ltd. | Chaline R-181S (Thermosetting Silicone) | 317.1 | 369.3 | - | No melting point because this product is thermosetting | 45 | 116.2 |
| Reference Example 8 | Nissin Chemical Industry Co, Ltd. | Chaline R-170S (Thermosetting Silicone) | 316.0 | 368.2 | - | No melting point because this product is thermosetting | 20 | 142.0 |

As illustrated in FIGS. 13 and 14, we found that the percentage of reduction in tensile elongation at break decreases as the frequency of occurrence of black spots decreases and the melting point of the lubricant increases. This is because when the frequency of occurrence of black spots is low and the lubricant has a high melting point, breakage starting from a black spot in the molded article is reduced or prevented. In FIGS. 13 and 14, the tensile elongation at break measured when no lubricant is added is used as a reference level in determining the percentage of reduction in tensile elongation at break. The heat resistance conditions for the lubricant used for each of Reference Examples 3, 4, 7, and 8 are such that the lubricant heated by TG-DTA at 10°C/min in a nitrogen atmosphere is reduced in weight by 10% at a temperature of 340°C or above. The lubricants used for Reference Examples 5 and 6 do not meet the heat resistance conditions. We found that the frequency of occurrence of black spots observed for Reference Examples 3, 4, 7, and 8 is lower than the frequency of occurrence of black spots observed for Reference Examples 5 and 6. Accordingly, the percentage of reduction in tensile elongation at break measured for Reference Examples 3, 4, 7, and 8 is lower than the percentage of reduction in tensile elongation at break measured for Reference Examples 5 and 6. In particular, Reference Example 4 that not only meets the above heat resistance conditions but also uses the lubricant having a melting point of 200°C or above is rated as having the highest tensile elongation at break.

Referring to Examples 9 and 10 and Comparative Examples 2 to 5, the following description discusses how the molecular weight and wear resistance of the molded article increase by the combined use of a carbodiimide compound and organic fiber (e.g., aramid fiber). In accordance with the data given in Table 3 below, raw materials were supplied to the kneading machine 27 arranged as illustrated in FIG. 2. Thus, resin pellets were prepared. The resin pellets prepared were then molded into test samples. The number average molecular weight of the resin used for each of Comparative Examples 2 to 5 and the number average molecular weight of "Leona 1402S" used for each of Examples 9 and 10 are in the ratio of 1.0 or 1.7 to 1.0. "Leona 1402S" is manufactured by Asahi Kasei Corp. For Comparative Examples 2 to 5, no carbodiimide compound was added.

### Evaluation Test

### (1) Amount of Residual Carbodiimide

The amount of residual carbodiimide in the resin pellets provided by Examples 9 and 10 was measured by following the procedure illustrated in FIGS. 1A to IF. The results of the measurement are given in Table 3. In Table 3, the column "Functional Group" gives the amount of carbodiimide group(s) itself or themselves contained in the resin pellets, and the column "Calculated in Terms of Compound" gives the amount of residual carbodiimide group(s) calculated in terms of carbodiimide compound used.

### (2) Number Average Molecular Weight Mn

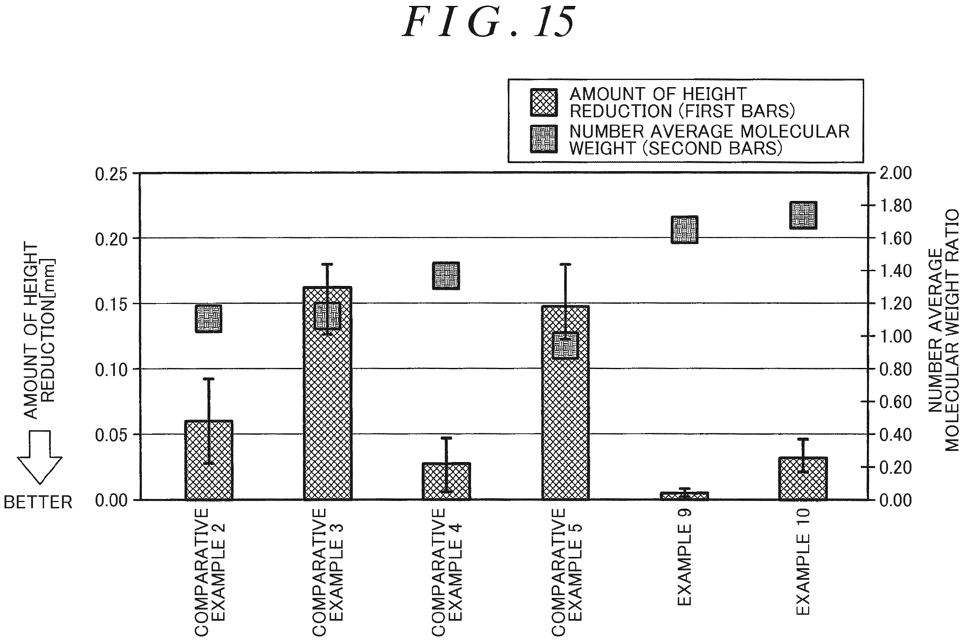

For each test sample, the number average molecular weight Mn was measured by gel permeation chromatography (GPC). The results of the measurement are given as relative ratios in FIG. 15.

### (3) Frictional Wear Test (for Wear Resistance)

Suzuki frictional wear test was conducted to measure the amount of reduction in height of each test sample. The amount of height reduction measured is determined to be a wear volume and expressed in mm. The results of the test are given in FIG. 15. The test was conducted under the following conditions:
- Four-point metal roller slid by resin ring
- Grease lubrication
- Test temperature set at room temperature
- Intermittent contact made by activation and deactivation

### (4) Evaluation

The number average molecular weight of raw resin used for each of Comparative Examples 3 and 5 was higher than the number average molecular weight of raw resin used for each of Examples 9 and 10 and Comparative Examples 2 and 4. In spite of this, FIG. 15 shows that the number average molecular weight of the resulting molded article for each of Comparative Examples 3 and 5 is lower than the number average molecular weight of the resulting molded article for each of Examples 9 and 10 and Comparative Examples 2 and 4. This is believed to be due to the fact that uniformly kneading aramid fiber requires increasing the number of revolutions of the kneading machine and/or increasing the temperature set for the barrel, resulting in heat generation that promotes resin decomposition. The wear resistance measured for each of Comparative Examples 3 and 5 is lower than the wear resistance measured for each of Examples 9 and 10 and Comparative Examples 2 and 4. Although the wear resistance measured for each of Comparative Examples 2 and 4 is relatively high because of the use of aramid fiber, the number average molecular weight measured for each of Comparative Examples 2 and 4 is lower than the number average molecular weight measured for each of Examples 9 and 10. The number average molecular weight measured for each of Examples 9 and 10 is considerably higher than the number average molecular weight measured for each of Comparative Examples 2 to 5. In addition to this, Examples 9 and 10 each provide the molded article that is highly resistant to wear.

**Table 3**

| | Resin | | | Aramid Fiber | | | | Carbodiimide Compound | | | | Amount of residual Carbodiimide in Pellet | |
|---|---|---|---|---|---|---|---|---|---|---|---|---|---|
| | Manufacturer | Grade | Number Average Molecular Weight Ratio | Manufacturer | Model | Amount Added (Percentage by Mass) | Adding Position | Manufacturer | Model | Amount Added (Percentage by Mass) | Adding Position | Percentage by Mass (Calculated in Terms of Compound) | Percentage by Mass (Functional Group) |
| Comparative Example 2 | - | - | 1.0 | TEIJIN LIMITED | Technora T322UR-3-12 | 10 | Side Feeder | - | - | - | - | - | - |
| Comparative Example 3 | - | - | 1.7 | | | 20 | Side Feeder | - | - | - | - | - | - |
| Comparative Example 4 | - | - | 1.0 | | | 10 | Side Feeder | - | - | - | - | - | - |
| Comparative Example 5 | - | - | 1.7 | | | 20 | Side Feeder | - | - | - | - | - | - |
| Example 9 | Asahi Kasei Corp. | Leona 1402S | 1.0 | | | 10 | Main Feeder | LANXESS | Stabaxol P-100 (Mn = 15000) | 2.5 | Side Feeder | 0.71 | 0.12 |
| Example 10 | | | 1.0 | | | 20 | Main Feeder | | | 2.5 | Side Feeder | 0.60 | 0.10 |

## Claims

1. A resin pellet comprising:
a polyamide resin; and
unreacted carbodiimide groups, wherein
the percentage of the unreacted carbodiimide groups in the resin pellet is 0.03% to 0.33% by mass,
wherein determining the mass percentage of the carbodiimide groups involves
cutting a thin piece from the pellet,
measuring the intensity of the carbodiimide groups (-N=C=N-) by passing infrared rays through the thin piece, and
quantifying the concentration of the carbodiimide groups in the thin piece by Lambert-Beer's law.

2. The resin pellet according to claim 1, wherein
the percentage of the unreacted carbodiimide groups in the resin pellet is 0.06% to 0.25% by mass.

3. The resin pellet according to any one of claims 1 to 2, wherein
the carbodiimide group is bound to an aromatic structure.

4. The resin pellet according to any one of claims 1 to 3, further comprising a lubricant.

5. The resin pellet according to claim 4, wherein
the lubricant heated by TG-DTA at 10°C/min in a nitrogen atmosphere is reduced in weight by 10% at a temperature of 340°C or above.

6. The resin pellet according to claim 4 or 5, wherein
the lubricant has a melting point of 200°C or more.

7. The resin pellet according to any one of claims 1 to 6, wherein
the resin has a number average molecular weight of 25,000 to 40,000, calculated by gel permeation chromatography (GPC) or solution viscosity method.

8. The resin pellet according to any one of claims 1 to 7, further comprising organic fiber.

9. A method for manufacturing a molded article, the method comprising molding the resin pellet according to any one of claims 1 to 8 into a molded article.

10. A method for manufacturing a resin pellet, the method comprising adding a carbodiimide bond-containing compound to a molten polyamide resin so as to cause an unreacted carbodiimide group to remain.

11. The resin pellet manufacturing method according to claim 10, wherein
the carbodiimide bond-containing compound is added in course of kneading.

## Patentansprüche

1. Harzpellet, umfassend:
ein Polyamidharz; und
nicht umgesetzte Carbodiimidgruppen, wobei
der prozentuale Anteil der nicht umgesetzten Carbodiimidgruppen im Harzpellet 0,03 bis 0,33 Massen-% beträgt,
wobei das Bestimmen der Massenprozent der Carbodiimidgruppen beinhaltet
Abschneiden eines dünnen Stücks von dem Pellet,
Messen der Intensität der Carbodiimidgruppen (-N=C=N-), indem Infrarotstrahlen durch das dünne Stück geleitet werden, und
Quantifizieren der Konzentration der Carbodiimidgruppen in dem dünnen Stück mittels des Lambert-Beer-Gesetzes.

2. Harzpellet nach Anspruch 1, wobei
der prozentuale Anteil der nicht umgesetzten Carbodiimidgruppen im Harzpellet 0,06 bis 0,25 Massen-% beträgt.

3. Harzpellet nach einem der Ansprüche 1 bis 2, wobei
die Carbodiimidgruppe an eine aromatische Struktur gebunden ist.

4. Harzpellet nach einem der Ansprüche 1 bis 3, ferner umfassend ein Gleitmittel.

5. Harzpellet nach Anspruch 4, wobei
das mittels TG-DTA mit 10 °C/min in einer Stickstoffatmosphäre erwärmte Gleitmittel bei einer Temperatur von 340 °C oder darüber um 10 % gewichtsreduziert wird.

6. Harzpellet nach Anspruch 4 oder 5, wobei
das Gleitmittel einen Schmelzpunkt von 200 °C oder mehr aufweist.

7. Harzpellet nach einem der Ansprüche 1 bis 6, wobei
das Harz ein Zahlenmittel des Molekulargewichts von 25.000 bis 40.000 aufweist, berechnet mittels Gelpermeationschromatographie (GPC) oder eines Lösungsviskositätsverfahrens.

8. Harzpellet nach einem der Ansprüche 1 bis 7, ferner umfassend organische Fasern.

9. Verfahren zur Herstellung eines Formartikels, wobei das Verfahren ein Formen des Harzpellets gemäß einem der Ansprüche 1 bis 8 zu einem Formartikel umfasst.

10. Verfahren zur Herstellung eines Harzpellets, wobei das Verfahren die Zugabe einer Verbindung, die eine Carbodiimidbindung enthält, zu einem geschmolzenen Polyamidharz umfasst, so dass bewirkt wird, dass eine nicht umgesetzte Carbodiimidgruppe bestehen bleibt.

11. Harzpelletherstellungsverfahren nach Anspruch 10, wobei die Verbindung, die eine Carbodiimidbindung enthält, im Verlauf eines Knetens zugegeben wird.

## Revendications

1. Boulette de résine comprenant :
une résine de polyamide ; et
des groupes carbodiimide n'ayant pas réagi, dans laquelle
le pourcentage des groupes carbodiimide n'ayant pas réagi dans la boulette de résine est de 0,03 % à 0,33 % en masse,
dans laquelle la détermination du pourcentage en masse des groupes carbodiimide implique
la découpe d'un mince morceau de la boulette,
la mesure de l'intensité des groupes carbodiimide (-N=C=N-) par passage de rayons infrarouges à travers le mince morceau, et
la quantification de la concentration des groupes carbodiimide dans le mince morceau par la loi de Lambert-Beer.

2. Boulette de résine selon la revendication 1, dans laquelle
le pourcentage des groupes carbodiimide n'ayant pas réagi dans la boulette de résine est de 0,06 % à 0,25 % en masse.

3. Boulette de résine selon l'une quelconque des revendications 1 à 2, dans laquelle
le groupe carbodiimide est lié à une structure aromatique.

4. Boulette de résine selon l'une quelconque des revendications 1 à 3, comprenant de plus un lubrifiant.

5. Boulette de résine selon la revendication 4, dans laquelle le lubrifiant chauffé par TG-DTA à 10°C/min dans une atmosphère d'azote est réduit en masse de 10 % à une température de 340°C ou supérieure.

6. Boulette de résine selon la revendication 4 ou 5, dans laquelle
le lubrifiant présente un point de fusion de 200°C ou supérieur.

7. Boulette de résine selon l'une quelconque des revendications 1 à 6, dans laquelle
la résine présente une masse moléculaire moyenne en nombre de 25 000 à 40 000, calculée par une méthode de chromatographie par perméation sur gel (GPC) ou de viscosité en solution.

8. Boulette de résine selon l'une quelconque des revendications 1 à 7, comprenant de plus une fibre organique.

9. Procédé de fabrication d'un article moulé, le procédé comprenant le moulage de la boulette de résine selon l'une quelconque des revendications 1 à 8 en un article moulé.

10. Procédé de fabrication d'une boulette de résine, le procédé comprenant l'addition d'un composé contenant une liaison carbodiimide à une résine de polyamide fondue afin d'occasionner le fait qu'un groupe carbodiimide n'ayant pas réagi subsiste.

11. Procédé de fabrication de boulette de résine selon la revendication 10, dans lequel
le composé contenant une liaison carbodiimide est ajouté au cours du malaxage.
